# EUROPEAN PATENT SPECIFICATION

(11) **EP 3 892 524 B1**
(45) Date of publication and mention of the grant of the patent: **27.03.2024**
(21) Application number: 20168439.6
(22) Date of filing: 07.04.2020
(51) Int. Cl.: B62D 7/15, B62D 7/02, B60K 7/00

(54) **WHEEL MODULE AND VEHICLE**
RADMODUL UND FAHRZEUG
MODULE DE ROUE ET VÉHICULE

(43) Date of publication of application: 13.10.2021
(73) Proprietor: Emm! solutions GmbH, 71263 Weil der Stadt (DE)
(72) Inventor: Müller, Armin, 71263 Weil der Stadt (DE)
(74) Representative: Meyer zu Bexten, Elmar

(56) References cited:
- FR-A1- 2 940 191
- US-A- 4 200 162
- US-A1- 2004 135 421
- US-A1- 2018 134 313

## Description

### Technical Field

The invention relates to the product as per the preamble of Claim 1.

### Background Art

At present, the transport of goods and merchandise is typically performed by vehicles with wheels mounted on an axle. For special vehicles, individual wheel modules are sometimes employed that include steering, brakes, and drive.

PTL1 and PTL2 each show a wheel module having a stub shaft rotational about a wheel axis and pivotal around both an outer steering axis and an inner steering axis running parallel to the outer axis, the steering axes running perpendicular to the wheel axis.

PTL3 discloses a wheel module configured for use on a vehicle chassis. The wheel module includes at least one non-rotating structural unit, a rotatable wheel controllably connected to the structural unit, a vehicle attachment interface operatively connected to the non-rotating structural unit including a load-bearing vehicle retention coupling, and a control signal receiver. The wheel module further includes chassis components including at least one of a brake system, steering system, motor, and suspension system operatively connected to the non-rotating structural unit, wheel, and control signal receiver for controlling the wheel in response to non-mechanical control signals received through the control signal receiver.

In NPL1, results of a comprehensive theoretical and experimental study aimed at creating a drive and a control system of a wheel module intended to be used with the steering and spring systems of an automobile and a mobile robot have been considered.

### Summary of invention

The invention as claimed is hereinafter disclosed in such a way that the technical problem with which it deals can be appreciated and the solution can be understood.

### Technical Problem

Special applications such as industrial automation require flat and structurally compact wheel modules. For different packaging concepts, it is necessary to be able to offer versatile assembly options. In addition, since the terrain may not be entirely even, suspension is required to ensure that the wheel contacts the ground properly. A wheel module package should further enable the integration of different drives such as in-wheel or flange-mounted motors comprising either internal or external rotors.

The invention aims to provide a wheel module that meets these diverse requirements.

### Solution to Problem

The problem is solved as per the characterizing part of Claim 1.

### Advantageous effect of invention

Maximum rotation of the wheel by means of the outer steering axis allows a wheel borne on the stub shaft to rotate on its contact spot, facilitating longitudinal as well as transverse travel. In this way, exact positioning without wheel movement compensation can be achieved in a compact design as the guidance provided by the wheel module allows for complete integration of its movements.

Due to their excellent maneuverability, any desired number of such wheel modules can be installed in a vehicle, consequently supporting any practical load, driving, or braking performance. Herein, each wheel module may easily be adjusted to different workloads and traction requirements.

Owing to the design of the steering axes, the rotary movements that occur during operation are well known and cable management can effortlessly be tailored to suit the package. By selecting the transmission ratio for the steering drive, steering is readily adaptable to accommodate varying wheel loads and terrain.

An embodiment exhibits an advantageously low profile as the bearing of the rotary disk is arranged clear of the wheel. Especially when combined with a bilateral mount, the disk's rigid connection to the wheel unit permits the handling of heavy loads.

The adjustable steering angles of the inner and outer axes allow for the module to be fitted at various positions within a chassis. To this end, a bearing as per Claim 3 can be screwed to the chassis in different directions and at arbitrary orientation angles. Considering the bearing's uncomplicated screw mounting surface, mounting the wheel module on the chassis is thus straightforward. Depending on configuration of the bearing, steering angles of up to 360° may be achieved thanks to the additional steering axis.

An integrated suspension as per Claim 5 compensates for undulations of the terrain and greatly broadens application of the wheel module, especially when combined with at least two support wheel units as defined in Claim 8. Such support wheels could be mounted at the front and rear of the vehicle of Claim 10, for example, and absorb extra load. Even where no support wheels are provided, such as in the vehicle of Claim 11, the suspension presses the wheel firmly onto the ground for proper traction and braking on rough terrain.

As may be gathered from Claim 6, both in-wheel drives and off-wheel drives - each option possibly integrating brake and gearing - may be implemented in the wheel module, enabling high power and torque levels.

Finally, the wheel module bears the advantage that, by locking either the inner or outer steering axis, simpler variants may be derived from the generic apparatus. This property renders the module ideal for use in a modular vehicle of utmost versatility.

### Brief description of drawings

Figure 1 is a perspective view of a first wheel module.
Figure 2 is a top view of a second wheel module.
Figure 3 is a cross-section of a third wheel module.

### Description of embodiments

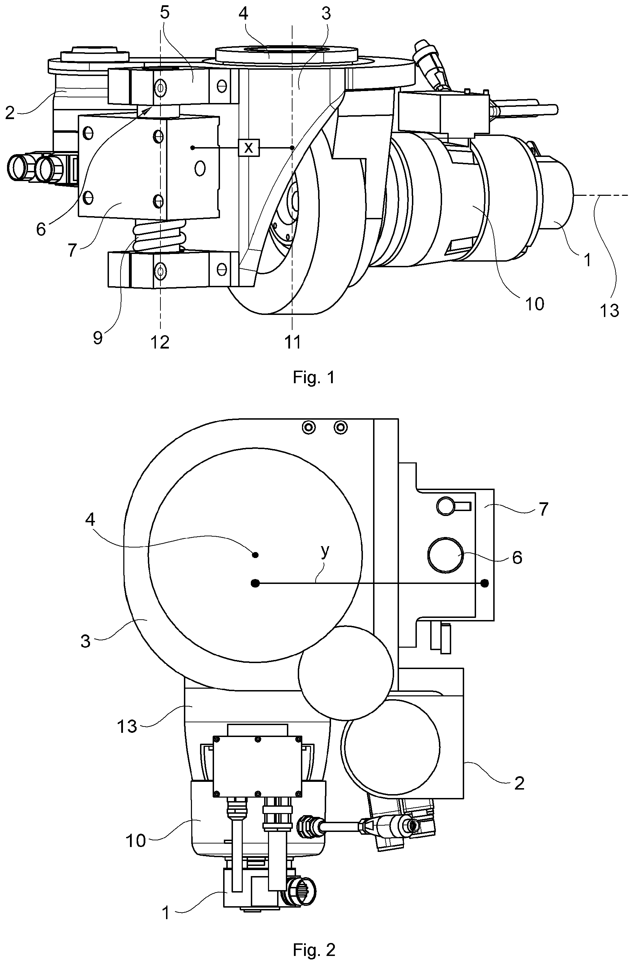

Figure 1 depicts a wheel module with an electrical traction drive (10) whose stub shaft (1) is designed for bearing a driven wheel pivotally around both an outer steering axis (11) and an inner steering axis (12) running parallel thereto, the steering axes (11, 12) naturally running perpendicular to the envisaged wheel axis (13). A unilateral mount (3) mounts the traction drive (10) rotatably around the outer axis (11). It is noted that while the traction drive (10) of the present embodiment features an internal rotor, an alternative wheel module may comprise a flange-mounted or in-wheel drive having an external rotor or no drive (10) at all - that is, a lazy axle stub.

Upon said mount (3), a rotary disk (4) is pivoted by means of which the traction drive (10) and shaft (1) may be actuated relative to the mount (3). Facing away from the traction drive (10), a support (5) fixed to the mount (3) supports the latter - along with the disk (4) pivoted thereupon - rotatably around the inner axis (12), which is defined by the axis of rotation of a guide pole (6) bolted within the support (5) and extending vertically alongside the mount (3) to a matching support screwed to the lower rim of the mount (3).

In the wheel module of Fig. 1, a linear actuator (x) - attached between the bearing (7) and mount (3) - actuates the pole (6) relative to the bearing (7), thus controlling motion about the inner axis (12) independently of the outer axis (11). Any person skilled in the art will appreciate that an equivalent effect may be achieved, for instance, by means of a steering rod connected mechanically to the mount (3).

In the alternative of Fig. 2 instead, the steering axes (11, 12) are interlinked by means of a push rod (y) articulating the bearing (7) with the rotary disk (4) pivoted upon the mount (3). That disk (4) is in turn geared with the steering drive (2) via an intermediate cogwheel (teeth not depicted), allowing for a combined steering action encompassing both steering axes (11, 12).

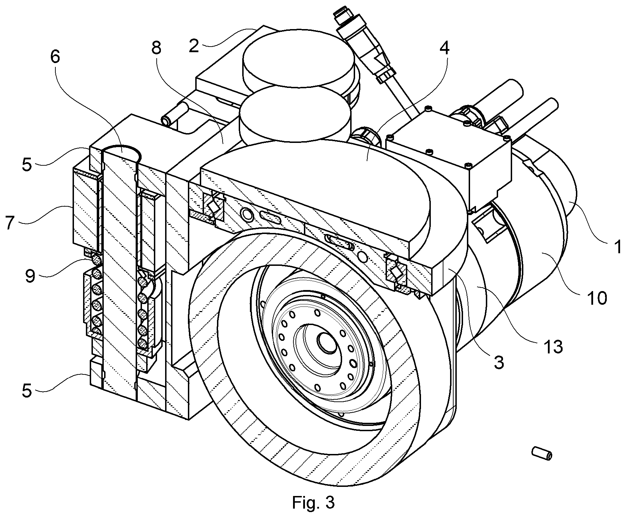

As is best seen in Fig. 3, the pole (6) - between the upper support (5) and its lower counterpart - traverses a radial slide bearing (7) that affixes the entire module to the chassis (not depicted), hence guiding the support (5) vertically along the inner axis (12) to compensate for uneven terrain. For suspension, an adjustable spring (9) is disposed coaxially about the pole (6) below the bearing (7), elastically bracing the support (5) and bearing (7) against each other.

### Industrial applicability

The invention is applicable, among others, throughout the automotive industry.

### Reference signs list

- 1: Stub shaft
- 2: Steering drive
- 3: Mount
- 4: Rotary disk
- 5: Support
- 6: Guide pole
- 7: Radial slide bearing
- 9: Spring
- 10: Traction drive
- 11: Outer steering axis
- 12: inner steering axis
- 13: Wheel axis
- x: Actuator
- y: Push rod

### Citation list

The following documents are cited hereinbefore.

### Patent literature

PTL1: FR 2940191 A (PEUGEOT CITROEN AUTOMOBILES SA [FR]) 25.06.2010
PTL2: US 2018134313 A (WIRTGEN GMBH [DE]) 17.05.2018
PTL3: US 7597169 B (BORRONI-BIRD, CHRISTOPHER E; CHERNOFF, ADRIAN B.; SHABANA, MOHSEN D.; VITALE, ROBERT LOUIS ET AL.) 17.07.2003

### Non-patent literature

NPL1: **BELOOUSOV,** Boris N., et al. Autonomous Mechatronics-Based Locomotion Module for Multi-Wheel Vehicle and Terrestrial Robot Applications. SAE International Journal of Commercial Vehicles. 2012, vol.5, no.2, p.455-461.

## Claims

1. Wheel module having
a stub shaft (1) rotational about a wheel axis (13) and pivotal around both an outer steering axis (11) and an inner steering axis (12) running parallel to the outer axis (11), the steering axes (11, 12) running perpendicular to the wheel axis (13),
a unilateral or bilateral mount (3) for mounting the shaft (1) rotatably around the outer axis (11), preferably over an angular range of at least 200°,
a rotary disk (4) pivoted upon the mount (3) for actuating the shaft (1) relative to the mount (3), and
a support (5) connected rigidly to the mount (3) for supporting the mount (3) and disk (4) rotatably around the inner axis (12),
**characterized in**
a guide pole (6) connected rigidly to the support (5) for guiding the support (5) along the inner axis (12).

2. Module as per Claim 1
having a steering drive (2) for swiveling the shaft (1) around the steering axes (11, 12).

3. Module as per Claim 1 or Claim 2
having a radial slide bearing (7) for bearing the pole (6) rotatably about the inner axis (12) and affixing the module to a chassis.

4. Module as per Claim 3
having an electric, such as rotary or spindle-driven, or hydraulic linear actuator (x), extending between the bearing (7) and the mount (3) or support (5), for actuating the pole (6) relative to the bearing (7).

5. Module as per Claim 3 or Claim 4
having a preferably adjustable spring (9) disposed coaxially about the pole (6) for bracing the support (5) against the bearing (7).

6. Module as per any of the preceding claims
having a push rod (y) articulating the disk (4) with the bearing (7) for interlinking the steering axes (11, 12).

7. Module as per any of the preceding claims
having either a preferably electrical traction drive (10) connected torsionally stiffly to the shaft (1) or a wheel comprising an in-wheel motor borne by the shaft (1).

8. Module as per any of any of Claim 1 through Claim 6
having a nondriven wheel borne by the shaft (1).

9. Vehicle having
two modules as per Claim 7 and one module as per Claim 8.

10. Vehicle having
two modules as per Claim 7 and four modules as per Claim 8.

11. Vehicle having
at least four modules as per Claim 7.

## Patentansprüche

1. Radmodul mit
einem um eine Radachse (13) drehbaren Wellenstumpf (1), der sowohl um eine äußere Lenkachse (11) als auch um eine parallel zur äußeren Achse (11) verlaufende innere Lenkachse (12) schwenkbar ist, wobei die Lenkachsen (11, 12) senkrecht zur Radachse (13) verlaufen,
einer ein- oder zweiseitigen Halterung (3), um den Wellenstumpf (1) um die äußere Achse (11) drehbar zu halten, vorzugsweise über einen Winkelbereich von mindestens 200°,
einem um die Halterung (3) schwenkbaren Drehteller (4), um den Wellenstumpf (1) bezüglich der Halterung (3) zu verstellen, und
einem starr mit der Halterung (3) verbundenen Träger (5), um die Halterung (3) und den Drehteller (4) um die innere Achse (12) drehbar zu tragen, **gekennzeichnet durch**
eine starr mit dem Träger (5) verbundene Linearführung (6), um den Träger (5) längs der inneren Achse (12) zu führen.

2. Modul nach Anspruch 1
mit einem Lenkantrieb (2), um den Wellenstumpf (1) um die Lenkachsen (11, 12) zu schwenken.

3. Modul nach Anspruch 1 oder Anspruch 2
mit einem Radialgleitlager (7), um die Führung (6) um die innere Achse (12) drehbar zu lagern und das Modul an einem Fahrgestell zu befestigen.

4. Modul nach Anspruch 3
mit einem sich zwischen dem Lager (7) und der Halterung (3) oder dem Träger (5) erstreckenden elektrischen, zum Beispiel dreh- oder spindelbaren, oder hydraulischen Linearantrieb (x), um die Führung (6) bezüglich des Lagers (7) zu verstellen.

5. Modul nach Anspruch 3 oder Anspruch 4
mit einer koaxial um die Führung (6) angeordneten, vorzugsweise einstellbaren Feder (9), um den Träger (5) gegen das Lager (7) zu verspannen.

6. Modul nach einem der vorhergehenden Ansprüche
mit einer den Teller (4) mit dem Lager (7) gelenkig verbindenden Schubstange (y), um die Lenkachsen (11, 12) zu verketten.

7. Modul nach einem der vorhergehenden Ansprüche
mit entweder einem drehfest mit der Welle (1) verbundenen, vorzugsweise elektrischen Fahrantrieb (10), oder einem Rad mit einem vom Wellenstumpf (1) getragenen Radnabenmotor.

8. Modul nach einem der Ansprüche 1 bis 6
mit einem vom Wellenstumpf (1) getragenen nicht angetriebenen Rad.

9. Fahrzeug mit
zwei Modulen nach Anspruch 7 und einem Modul nach Anspruch 8.

10. Fahrzeug mit
zwei Modulen nach Anspruch 7 und vier Modulen nach Anspruch 8.

11. Fahrzeug mit
mindestens vier Modulen nach Anspruch 7.

## Revendications

1. Module de roue comportant
un arbre (1) tournant autour d'un axe de roue (13) et pivotant autour d'un axe de direction extérieur (11) et d'un axe de direction intérieur (12) parallèle à l'axe extérieur (11), les axes de direction (11, 12) étant perpendiculaires à l'axe de roue (13),
un support unilatéral ou bilatéral (3) pour monter l'arbre (1) de manière rotative autour de l'axe extérieur (11), de préférence sur une plage angulaire d'au moins 200°,
un disque rotatif (4) pivotant sur la monture (3) pour actionner l'arbre (1) par rapport à la monture (3), et
un support (5) relié rigidement à la monture (3) pour supporter la monture (3) et le disque (4) de manière rotative autour de l'axe intérieur (12), **caractérisé par**
un poteau de guidage (6) relié rigidement au support (5) pour guider le support (5) le long de l'axe intérieur (12).

2. Module selon la revendication 1
comportant une commande de direction (2) pour faire pivoter l'arbre (1) autour des axes de direction (11, 12).

3. Module selon la revendication 1 ou la revendication 2
comportant un palier à glissement radial (7) pour porter le poteau (6) de manière rotative autour de l'axe intérieur (12) et fixer le module à un châssis.

4. Module selon la revendication 3
comportant un actionneur linéaire (x) électrique, tel qu'un actionneur rotatif ou à broche, ou hydraulique, s'étendant entre le palier (7) et la monture (3) ou le support (5), pour actionner le poteau (6) par rapport au palier (7).

5. Module selon la revendication 3 ou la revendication 4
comportant un ressort (9), de préférence réglable, disposé coaxialement autour du poteau (6) pour soutenir le support (5) contre le palier (7).

6. Module selon l'une quelconque des revendications précédentes
comportant une tige de poussée (y) articulant le disque (4) avec le palier (7) pour relier les axes de direction (11, 12).

7. Module selon l'une quelconque des revendications précédentes
comportant soit une traction de préférence électrique (10) reliée en torsion à l'arbre (1), soit une roue comportant un moteur intérieur porté par l'arbre (1).

8. Module selon l'une des revendications 1 à 6
comportant une roue non entraînée portée par l'arbre (1).

9. Véhicule comportant
deux modules selon la revendication 7 et un module selon la revendication 8.

10. Véhicule comportant
deux modules selon la revendication 7 et quatre modules selon la revendication 8.

11. Véhicule comportant
au moins quatre modules selon la revendication 7.
